# EUROPEAN PATENT SPECIFICATION

(11) **EP 0 720 886 B1**
(45) Date of publication and mention of the grant of the patent: **01.12.1999**
(21) Application number: 95100217.9
(22) Date of filing: 09.01.1995
(51) Int. Cl.: B23G 1/46

(54) **Tapper mechanism**
Gewindeschneidmechanismus
Mécanisme à tarauder

(43) Date of publication of application: 10.07.1996
(73) Proprietor: Daishowa Seiki Co., Ltd., Higashiosaka-shi Osaka-fu (JP)
(72) Inventor: Kubo, Haruaki, Nara-shi, Nara (JP)
(74) Representative: Görg, Klaus, Dipl.-Ing.

(56) References cited:
- CH-A- 512 958
- CH-A- 655 264
- US-A- 4 014 421
- US-A- 4 029 429
- US-A- 4 705 437

## Description

### BACKGROUND OF THE INVENTION

### 1. Field of the Invention

The present invention relates to a tapping attachment ( viz. a tapper ) used to form a screw thread on a metal workpiece, that is, to tap it.

### 2. Description of the Prior Art

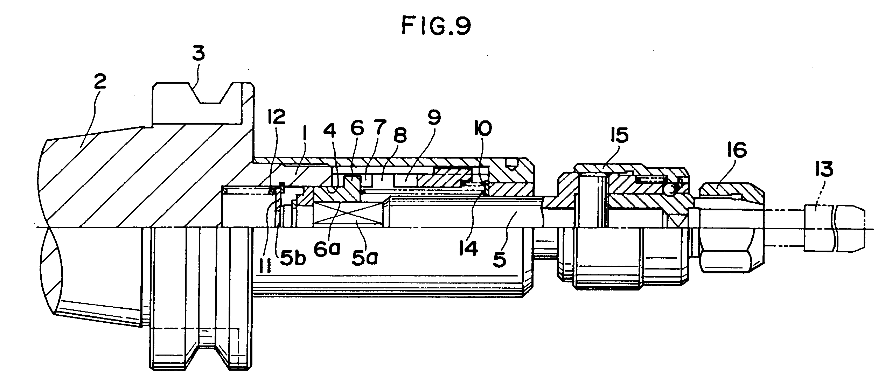

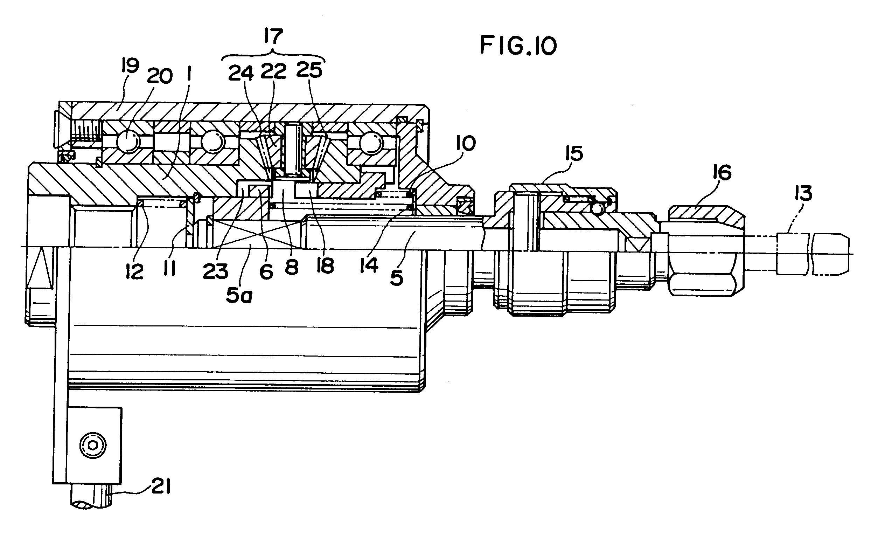

The prior art as the background of this invention is shown in Figs. 9 and 10. The reference numeral 1 in Fig. 9 denotes a tapper body having at a basal or proximal end thereof a shank 2 and a flange-shaped fitting 3 which is to be gripped by a manipulator. The shank 2 is adapted to be operatively connected to a drive shaft ( not shown ) of a machine tool. A large-diameter axial bore 4 is formed axially of the tapper body 1, and a driven shaft 5 fits in the bore to be slidable longitudinally of the tapper body.

An engager 6 has a square bore 6a shaped to fit on a square reduced end 5a formed integral with a basal end of the driven shaft 5. The engager 6 protrudes radially and is displaceable within the bore in an axial direction thereof. A normal clutch 7 disposed in contact with the periphery defining the axial bore protrudes thereinto, so as to engage with the engager 6 when it is to be rotated in a normal or forward angular direction. A neutral free space 8 in which the clutch 7 is not engageable with the engager 6 is provided proximate and in front of the clutch and extends axially thereof. A reverse clutch 9 is disposed also in contact with the axial bore periphery and in front of the neutral space. The reverse clutch also protrudes into said bore, so as to engage with the engager 6 when it has to rotate in a reverse angular direction. A small buffer spring 10 supports the reverse clutch 9 so that this clutch is rotatable in unison with the tapper body 1 and nevertheless displaceable axially a little distance.

A seat 11 disengageably engaging a basal end surface 5b of the driven shaft 5 is disposed in the axial bore 4 of the tapper body 1. An absorbing spring 12 ( formed as a compression spring ) intervenes between the seat 11 and a basal bottom of said axial bore 4. The absorbing spring 12 is effective to absorb a positional error that might appear in an axial direction between an axially driving member in the machine tool and this tapper attached thereto and driven thereby. A recovery spring 14 ( formed as a tension spring ) intervenes between a distal bottom of the axial bore 4 and the engager 6 protruding radially and outwardly of the driven shaft 5. The recovery spring 14 urges the driven shaft towards its basal end. A coupling 15 is disposed at the distal end of the driven shaft 5, so that a tap holder 16 carrying a screw tap 13 can be detachably attached to said driven shaft.

In use of such a tapper, the flange-shaped fitting 3 protruding from the tapper body 1 will be gripped by the manipulator, and the shank 2 is connected to the drive shaft in the machine tool so as to rotate the tapper body 1.

As the tapper body rotates, the engager 6 will engage with the forward clutch 7 so that the driven shaft 5 rotates in the forward angular direction and the tap 13 carried by the distal end of said shaft taps a female screw thread in a workpiece. During this process, the driven shaft 5 will be guided by and along the workpiece's bore which is being tapped. Therefore, the driven shaft 5 advances forward by itself independently of the tapper body 1. When the workpiece's bore is completely tapped, the engager 6 will disengage from the forward clutch 7 and enter the neutral space 8. Thus, a torque which has been being transmitted from the tapper body 1 to the driven shaft is intercepted to bring it into its idle position. Subsequently, the drive shaft will rotate the tapper body 1 reversely and thereby retract it a small distance. As a result, the engager 6 leaves the neutral space 8 and comes into engagement with the reverse clutch 9. Therefore, the driven shaft is now positively driven to rotate in a reverse angular direction. The screw tap 13 will then be guided likewise by and along the tapped bore in the workpiece, until fully disengaging from the tapped bore.

Fig. 10 shows another known apparatus of almost the same structure as that of the apparatus shown in Fig. 9, as indicated by the same reference numerals allotted to their elements. However, a switch-over mechanism 17 is incorporated in the tapper body shown in Fig. 10 so that the reverse clutch 18 always rotates in reverse direction. In this case, the drive shaft in the machine tool need not be switched over into reverse rotation, contrarily to the apparatus shown in Fig. 9.

A cover 19 is supported on an outer periphery of the tapper body 1, with bearings 20 intervening between them, and is kept stationary by an anchor arm 21. A bevel gear 22 is journaled on a stud shaft secured to an inner periphery of the cover 19. The stud shaft extends perpendicular to the axis of tapper body. The bevel gear 22 is in mesh with a pair of geared portions 24 and 25. One of them 24 is integral with a forward clutch 23, while the other geared portion 25 is fixed to a reverse clutch 18. Therefore, the reverse clutch 18 always rotates in a direction contrary to the direction in which the forward clutch 23 rotates. This tapper, whose drive shaft need not be switched over into the reverse direction, can be controlled easier.

In both the prior art tappers shown in Figs. 9 and 10, the engager 6 releasably in mesh with the forward clutch 7 or 23 travels axially together with the driven shaft 5. This structure often causes a certain problem when the engager 6, thus the driven shaft 5, is changed from its operative position connected to the tapper body 1 by the forward clutch 7 or 23, to its idle or neutral position. This problem is a serious difficulty for the engager 6 to instantaneously disengage from the forward clutch, thus causing the 'chattering' between the clutch and the engager which is being disengaged therefrom. Such a chattering has been causing an earlier abrasion of them and a lower accuracy of the tapping operation. The chattering may be a phenomenon that the mating members repeat to engage with and disengage from each other in a short time. Those tappers are usually installed in automated machine tools, and a proper distance is selected and preset therein as an invariable machining stroke of tapper body 1. Thus, the chattering taking place in such as system has been impairing the machining accuracy.

### SUMMARY OF THE INVENTION

Therefore, an object of the present invention is to provide a tapper mechanism comprising an engager which is protected from causing any chattering phenomenon when the engager is disengaging, but has not yet fully disengaged, from a clutch. In other words, the engager is to be prevented herein from repeatedly engaging with and disengaging from the clutch in a short time so that the engager is sharply switchable from its operative position into its idle or neutral position. This object is achieved with a tapper having features of claim 1.

The engager employed herein must be able to be quickly displaced out of the clutch and spaced a sufficient distance therefrom so as not to erroneously contact the clutch again, when it has to disengage therefrom. Any chattering must not arise to early abrade the engaging portions of the engager and the clutch.

Transmission of torque to a driven shaft rotating at a high speed can now be changed over between its operative state and its neutral state, since the chattering which has been inevitable between members engageable with each other is now prevented from occurring, whereby the tapping efficiency of a tapper mechanism provided herein is improved to a remarkable extent.

The present invention is applicable to any tapping apparatus operating in an automated machine, such as NC machine tools, wherein the apparatus may be controlled precisely in accordance with an automatic control system which the machine tool comprises. Thus, the invention must contribute to a high precision in the tapping operations.

While the novel features of the present invention are set forth particularly in the appended claims, the invention, both as to its concretization and its intent, as well as other objects and features thereof will be better understood from the following description made referring to the drawings.

### BRIEF DESCRIPTION OF THE DRAWINGS

Fig. 1 is a front elevation of a tapper mechanism provided in an embodiment and shown partly in cross section;
Fig. 2 illustrates a first operating stage of essential parts in the tapper mechanism;
Fig. 3 shows a second operating stage of the essential parts in the tapper mechanism;
Fig. 4 shows a third operating stage of the essential parts in the tapper mechanism;
Fig. 5 shows a final operating stage of the essential parts in the tapper mechanism;
Fig. 6 illustrates further essential parts in the tapper mechanism;
Fig. 7 shows essential parts corresponding to those which are shown in Fig. 6 and included in a comparative reference example;
Figs. 8(a) to 8(c) illustrate a further embodiment, in which:

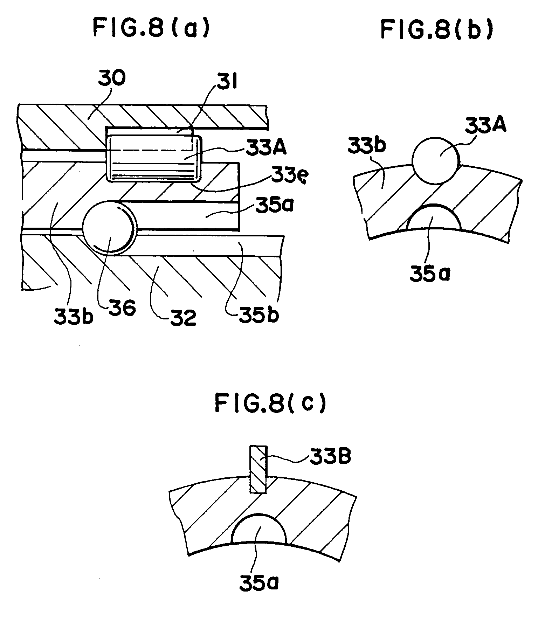

Fig. 8(a) is a cross-sectional front elevation of parts in the further embodiment;
Fig. 8(b) is also a cross-sectional side elevation of the further embodiment; and
Fig. 8(c) is a cross-sectional side elevation of a modification of the further embodiment;
Fig. 9 is a cross-sectional front elevation of a prior art apparatus; and
Fig. 10 is also a cross-sectional front elevation of another prior art apparatus.

It will be recognized that some or all of the drawing figures are schematic representations for purpose of illustration, and do not necessarily depict the actual relative sizes or locations of the elements shown in the embodiments described below.

### DETAILED DESCRIPTION OF THE PREFERRED EMBODIMENT

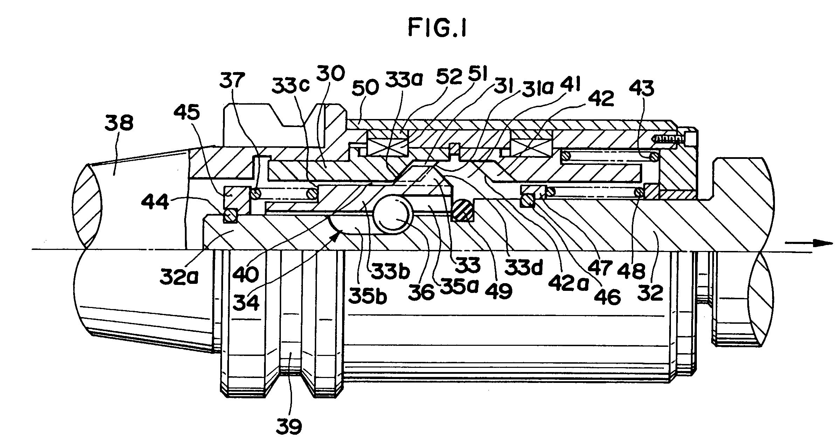

Fig. 1 shows a tapper mechanism which the invention provides in an embodiment, with essential elements thereof being shown in cross section. This tapper mechanism comprises a tapper body 30, which has at its basal end a shank 38 and a flange-shaped fitting 39. The shank 38 is operatively connectable to a drive shaft ( not shown ) of a machine tool, and the fitting 39 is to be gripped by a manipulator of the machine tool. A large-diameter axial bore 40 is formed axially of the tapper body 30, and a driven shaft 32 fits in the bore to be slidable longitudinally of the tapper body.

A ring-shaped member 33b fits on a basal end portion 32a of the driven shaft 32. An engageable claw 33 protrudes radially and outwardly from the ring-shaped member 33b. The engageable claw 33 is displaceable along an outer periphery of the driven shaft 32 in an axial direction thereof. Both the basal end portion 32a and the ring-shaped member 33b are easy to make, since they are a round rod and a round cylinder, respectively. A normal clutch 31 is formed integral with an inner periphery of tapper body 30 ( or integrally secured thereto by means of a fixing ring or the like ), so as to engage with the engageable claw 33 when it has to rotate in a normal or forward angular direction. A neutral free space 41 in which the clutch 31 is disconnected from the engageable claw 33 is provided proximate and in front of the clutch and extends axially thereof. A reverse clutch 42 is disposed coaxially with and in front of the neutral space 41, so as to be connected to the engageable claw 33 when it has to rotate in a reverse angular direction. A small buffer spring 43 supports the reverse clutch 42 so that this clutch is rotatable in unison with the tapper body 30 and nevertheless displaceable axially thereof a little distance.

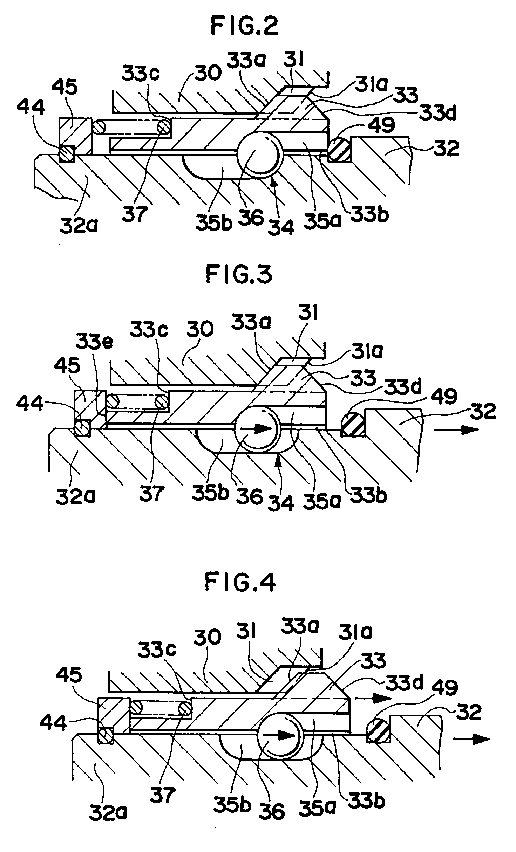

Axial edges 31a and 42a respectively of the forward and reverse clutches 31 and 42 are slanted in radial direction, as shown in the drawings. Correspondingly, opposite axial edges 33a and 33d of the engageable claw 33 are also oblique in radial direction, as best seen in Fig. 2. The axial edges 31a, 42a, 33a and 33d may not necessarily be straight as shown in the drawings, but be somewhat arcuate.

A stop ring 44 is secured to an outer periphery of the basal end of the driven shaft 32. A seat 45 for spring is supported by the stop ring 44, and a clutch spring 37 intervenes between the seat 45 and a basal end surface 33c of the engageable claw 33. The spring 37 always urges the claw 33 in a direction away from the forward clutch 31.

A slipping means 34 is disposed between the driven shaft 32 and the engageable claw 33 fitting thereon, such that they can not only rotate in harmony but also can be displaced quickly in axial direction and relative to each other.

In the present embodiment, the slipping means 34 may be constructed as follows. A semi-U-shaped groove 35a and generally U-shaped groove 35b may be formed respectively in the peripheral portions of the engageable claw 33 and the driven shaft 32, with said portions facing one another. Those grooves are of a proper axial length adapted to receive a clutch ball 36 and permit it to roll in axial direction. The clutch ball 36 forces on one hand the claw 33 to rotate synchronously with the driven shaft 32, and on the other hand allows them to slide relative to each other in axial direction.

A further stop ring 46 fixed to an outer peripheral portion of the driven shaft 32 supports a seat 47 for a recovery spring 48 ( formed as a tension spring ). This spring 48 intervenes between the seat 47 and a distal bottom of the tapper body's axial bore 40, whereby the driven shaft 32 is urged towards its basal end. In addition, a further seat ( not shown ) may disengageably engage with a basal end surface of the driven shaft 32, so that an absorbing spring ( formed as a compression spring ) ( not shown ) is disposed in the axial bore 40 of the tapper body 30. The absorbing spring, which thus intervenes between the further seat and the basal bottom of said axial bore, will desirably absorb a positional difference that might appear in an axial direction between an axially driving member in the machine tool and a screw tap 13 driven thereby. A bumper ring 49 as a buffering member is disposed on the driven shaft outer periphery, and the function of this ring located at a region between the claw and the seat for recovery spring will be described below. A coupling ( not shown ) is provided at a distal end of the driven shaft, so that a holder for the screw tap 13 shown in Fig. 9 can detachably be attached to said shaft.

A cover 50 enclosing the tapper body 30 is connected thereto by means of keys 51 secured to said body and fixing members 52 mating the keys, those members 52 being made of an elastic material such as a rubber.

In operation, the tapper body 30 will be put into rotation, after the flange-shaped fitting 39 protruding therefrom is gripped by a manipulator and the shank 38 is connected to the drive shaft installed in a machine tool.

As the tapper body 30 starts to rotate, the engageable claw 33 will engage with the forward clutch 31, causing the driven shaft 32 to rotate in the forward angular direction. The screw tap 13 held by the distal end of said driven shaft will thus tap a female thread in rough bore previously formed in a workpiece. Figs. 1 and 2 show the starting stage of such a tapping operation.

As illustrated in Fig. 1 and particularly in Fig. 2, the basal end 32a of the driven shaft 32 on which the claw 33 fits is located at its most leftward position in the drawings, at this moment. Therefore, the clutch spring 37 sandwiched between the seat 45 secured to the shaft and the claw 33 is in its most expanded state, exerting the weakest resilient force. The clutch ball 36 is positioned between the leftward end ( in the drawings ) of the groove 35a in the claw 33 and the rightward end ( in the drawings ) of the other groove 35b in the driven shaft 32.

In this state, the tapper body will drive the driven shaft 32 through the clutch 31, the claw 33 and the ball 36, so as to initiate the tapping operation. As seen in Fig. 3, the driven shaft will be guided forwardly by and along the rough bore that is being tapped, so that said shaft 32 propels itself to the right in the drawings. During such a self-propelling stage, the clutch 31 is in a face-to-face contact with the engageable claw 33, affording a sufficient frictional force between them. However, the ball 36 intervenes between the claw 33 and the driven shaft 32, thus rendering them to be in a less-frictional rolling contact with each other. Consequently, said shaft 32 can advance for a while forwardly and independently of the claw 33. As a result, the clutch spring 37 is compressed between the seat 45 and the claw 33 so as to accumulate its resilient force.

The driven shaft 32 continues to advance until the spring seat 45 integral therewith bears against the basal end surface 33e of engageable claw 33, at an end point of a predetermined stroke for the driven shaft as shown in Fig. 3. Subsequently, the claw 33 is forced forwards to move together with the driven shaft 32, a distance such that the rearward edge 33a come close to the forward edge 31a of the clutch, as will be seen in Fig. 4.

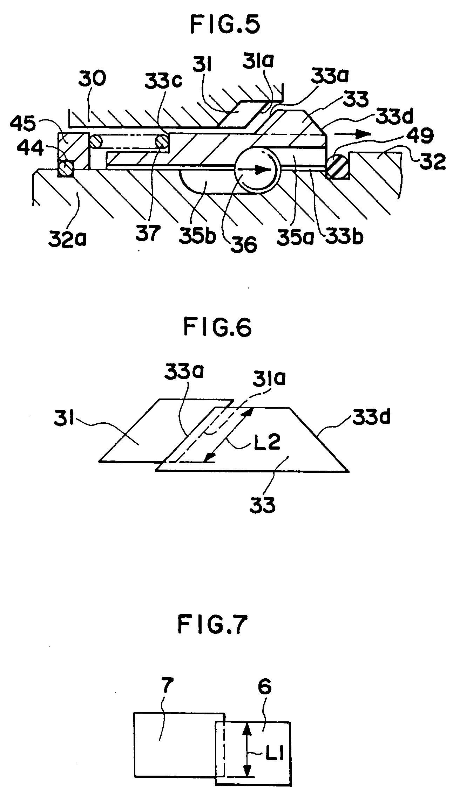

As the driven shaft still further moves forwards as shown in Fig. 5, the edges 33a and 31a are separated from each other, thereby causing the claw 33 to be disengaged from the clutch 31 and eliminating the frictional contact between them. In response to such a change in the relationship between relevant members, the claw 33 will make an instant and rapid forward movement on and relative to the driven shaft 32, due to the clutch ball 36 affording the less-frictional contact and thanks to the releasing of elastic energy accumulated in the clutch spring 37. Thus, the engageable claw 33 surely and sharply disengages from the clutch 31, and will never contact again it even if the speed of driven shaft 32 making an additional forward movement is relatively low. In this state, the clutch ball 36 is in contact with and retained between the basal end of the groove 35a and the distal end of the other groove 35b. Therefore, the engageable claw 33 at such a foremost position can no longer move forward relative to the driven shaft. The bumper ring 49 functions as a cushion absorbing a shock which would otherwise imparted to the claw 33, at an instant when it takes its foremost position.

It is advantageous that the rolling ball 36 need to make only a less axial displacement that is generally a half of the differential displacement found between the claw 33 and the driven shaft 32 moving relative thereto.

The engageable and disengageable edges 31a and 33a off the clutch 31 and the claw 33 are slanted in radial direction, as best seen in Fig. 6. Therefore, they can have an engagement length L₂ comparatively greater than that L₁ of a clutch 7 and a claw 6 that are perpendicular to an axis of the reference apparatus shown in Fig. 7. Thus, the clutch 31 has a wider area in contact with the claw 33, thereby reducing a local abrasion thereof. As suggested above, the edges 31a and 33a may be shaped somewhat arcuate and convex.

As the tapping of the bore in the workpiece finishes, the claw 33 disengages in said manner from the forward clutch 31 so as to enter the neutral space 41 where the torque transmission from the tapper body 30 to the driven shaft 32 is intercepted. Subsequent to this transient neutral state, the drive shaft in machine tool will drive the tapper body to rotate in a reverse angular direction. The reverse rotation of tapper body will displace it a small distance towards its basal end, and consequently cause the reverse clutch 42 into engagement with the claw 33 that has been transiently in the neutral state. Thus, the driven shaft 32 starts to rotate in reverse direction. The engageable edges 33d and 42a are also slanted in radial direction so that their abrasion is diminished.

The reversely rotating driven shaft 32 will likewise be guided through the already tapped bore, until the screw tap 13 is completely withdrawn therefrom.

Although the engageable claw 33 is formed integral with the ring-shaped member 33b in the described embodiment, this member may alternatively have an axially extending groove 33e to tightly and detachably hold an alternative claw as shown in Fig. 8(a). This detachable claw may either be a short columnar piece 33A shown in Fig. 8(b), or be a small plate 33B shown in Fig. 8(c). Anyway, such a detachable claw 33A or 33B can readily be replaced with a new one. Only such a claw may be made of an abrasion-resistant material, if so wanted.

The tapper provided in the described embodiment is applied to a case wherein the drive shaft of the machine tool reversibly rotates, it can apply also to another case as shown in Fig. 10 wherein the tapper has incorporated therein the known reversing mechanism, as will be understood from the description given above.

Although the invention has been described in terms of the presently preferred embodiments, it is not to be understood that such disclosure is limitative.

A variety of alterations and modifications will become apparent to those who are skilled in the art, from the disclosure given above. Accordingly, the appended claims should be interpreted as covering all such alterations and modifications that will fall within the scope of the present invention as claimed.

## Claims

1. A tapper mechanism comprising:
a tapper (30) body capable of being driven to rotate and having a clutch (31) incorporated therein;
a driven shaft (32) having a portion rotatably held in the tapper body and extending coaxially thereof;
an engageable claw (33) connected to and carried by the driven shaft so as to releasably engage with the clutch so as to transmit a torque from the tapper body to the driven shaft;
the driven shaft being movable axially of the tapper body a predetermined stroke such that the engageable claw is disengaged from the clutch, thereby intercepting the torque not to be transmitted to the driven shaft and rendering it into a neutral state;
the driven shaft having a distal end to which a screw tap (13) is connected;
a slipping means (34) interposed between the driven shaft and the engageable claw operably connected thereto;
the slipping means being constructed such that the claw and the driven shaft rotate in unison and are displaceable relative to each other in an axial direction of the tapper body; and
a clutch spring (37 urging the engageable claw away from the clutch.

2. A tapper mechanism as defined in claim 1, wherein the slipping means comprises a clutch ball (36) fitting in grooves (35a, 35b) formed in surface portions of the claw and the driven shaft, with the surface portions facing one another so that the clutch ball rolls only in the axial direction.

3. A tapper mechanism as defined in claim 1, wherein the clutch and the claw have edges (31a, 33a; 33d, 42a) which are engageable with each other and slanted in a radial direction of the driven shaft.

4. A tapper mechanism as defined in claim 1, further comprising a buffering member disposed at an end of the predetermined stroke, wherein the buffering member serving as cushion for the engageable claw.

5. A tapper mechanism as defined in claim 1, wherein the engageable claw is detachably attached to the driven shaft.

## Patentansprüche

1. Gewindebohrmechanismus mit:
einem Gewindebohrerkörper (30), der derart angetrieben werden kann, daß er sich dreht, und der eine darin eingebaute Kupplung (31) aufweist;
einer getriebenen Welle (32), die einen Abschnitt aufweist, der drehbar in dem Gewindebohrerkörper gehalten ist und sich koaxial von diesem erstreckt;
einer in Eingriff bringbaren Klaue (33), die an die getriebene Welle angeschlossen ist und derart durch diese getragen wird, daß sie lösbar mit der Kupplung derart in Eingriff kommt, daß eine Drehkraft von dem Gewindebohrerkörper auf die angetriebene Welle übertragen wird;
wobei die angetriebene Welle in Axialrichtung des Gewindebohrerkörpers um einen vorbestimmten Hub derart bewegbar ist, daß die in Eingriff bringbare Klaue von der Kupplung außer Eingriff gebracht wird, wodurch die Drehkraft unterbrochen wird, so daß sie nicht auf die getriebene Welle übertragen wird, und sie in einen Neutralzustand gebracht wird;
wobei die getriebene Welle ein distales Ende aufweist, an das ein Gewindebohrer (13) angeschlossen ist;
einer Rutscheinrichtung (34), die zwischen der getriebenen Welle und der in Eingriff bringbaren Klaue, die treibend mit dieser verbunden ist, angeordnet ist;
wobei die Rutscheinrichtung derart gestaltet ist, daß sich die Klaue und die getriebene Welle im Gleichklang drehen und bezüglich einander in einer Axialrichtung des Gewindebohrerkörpers versetzbar sind; und
einer Kupplungsfeder (37), welche die in Eingriff bringbare Klaue von der Kupplung wegzwingt.

2. Gewindebohrmechanismus nach Anspruch 1, wobei die Rutscheinrichtung eine Kupplungskugel (36) aufweist, die in Nuten (35a, 35b) paßt, die in Oberflächenabschnitten der Klaue und der getriebenen Welle ausgebildet sind, wobei die Oberflächenabschnitte zueinander gerichtet sind, so daß die Kupplungskugel nur in der Axialrichtung rollt.

3. Gewindebohrmechanismus nach Anspruch 1, wobei die Kupplung und die Klaue Ränder (31a, 33a; 33d, 42a) aufweisen, die miteinander in Eingriff bringbar sind und in einer Radialrichtung der getriebenen Welle geneigt sind.

4. Gewindebohrmechanismus nach Anspruch 1, ferner mit einem Pufferelement, das an einem Ende des vorbestimmten Hubes angeordnet ist, wobei das Pufferelement als Polsterung für die in Eingriff bringbare Klaue dient.

5. Gewindebohrmechanismus nach Anspruch 1, wobei die in Eingriff bringbare Klaue abnehmbar an die getriebene Welle angebracht ist.

## Revendications

1. Mécanisme de taraudage comportant:
un corps d'outil à tarauder (30) apte à être entraîné en rotation et dans lequel est incorporé un embrayage (31);
un arbre entraîné (32) dont une partie est maintenue de manière à pouvoir tourner dans le corps de l'outil à tarauder et s'étend coaxialement par rapport à ce dernier;
une mâchoire (33) apte à être accouplée, reliée à l'arbre entraîné et portée par ce dernier de manière à s'accoupler de manière libérable avec l'embrayage, pour ainsi transmettre un couple du corps d'outil à tarauder à l'arbre entraîné;
l'arbre entraîné étant mobile axialement par rapport au corps d'outil à tarauder sur une course prédéterminée, de telle sorte que la mâchoire apte à être accouplée soit désaccouplée de l'embrayage, en interceptant ainsi le couple qui ne doit pas être transmis à l'arbre entraîné, et en le ramenant dans un état neutre;
l'arbre entraîné présentant une extrémité distale à laquelle est reliée un taraud fileté (13);
un moyen de glissement (34) intercalé entre l'arbre entraîné et la mâchoire apte à être accouplée qui y est reliée fonctionnellement;
le moyen de glissement étant construit de telle sorte que la mâchoire et l'arbre entraîné tournent à l'unisson et puissent être déplacés l'un par rapport à l'autre dans une direction axiale du corps de l'outil à tarauder; et
un ressort d'embrayage (37) repoussant la mâchoire apte à être accouplée à l'écart de l'embrayage.

2. Mécanisme de taraudage selon la revendication 1, dans lequel le moyen de glissement comporte une bille d'embrayage (36) se logeant dans des rainures (35a ,35b) formées dans des parties de la surface de la mâchoire et de l'arbre entraîné, les parties de surface étant tournées l'une vers l'autre de telle sorte que la bille d'embrayage roule uniquement dans la direction axiale.

3. Mécanisme de taraudage selon la revendication 1, dans lequel l'embrayage et la mâchoire présentent des bords (31a, 33a; 33d, 42a) qui peuvent s'accoupler l'un avec l'autre, et sont biseautés dans une direction radiale de l'arbre entraîné.

4. Mécanisme de taraudage selon la revendication 1, comportant en outre un élément tampon disposé à une extrémité de la course prédéterminée, l'élément tampon servant d'amortissement à la mâchoire apte à être accouplée.

5. Mécanisme de taraudage selon la revendication 1, dans lequel la mâchoire apte à être accouplée est attachée à l'arbre entraîné de manière à pouvoir être détachée.
